# EUROPEAN PATENT SPECIFICATION

(11) **EP 4 390 329 B1**
(45) Date of publication and mention of the grant of the patent: **04.02.2026**
(21) Application number: 23217080.3
(22) Date of filing: 15.12.2023
(51) Int. Cl.: G01D 5/34, G01D 5/38, G03F 7/00

(54) **ENCODER APPARATUS**
KODIERGERÄT
APPAREIL CODEUR

(30) Priority: 20.12.2022 EP 22275164; 20.12.2022 EP 22275165; 20.12.2022 EP 22275166; 21.12.2022 EP 22275167
(43) Date of publication of application: 26.06.2024
(73) Proprietor: Renishaw PLC, Wotton-under-Edge, Gloucestershire GL12 8JR (GB)
(72) Inventor: McADAM, Simon Eliot, Wotton-under-Edge, GL12 8JR (GB); BALE, Richard James, Wotton-under-Edge, GL12 8JR (GB)
(74) Representative: Rolfe, Edward William

(56) References cited:
- WO-A1-2017/042570
- US-A1- 2016 231 143
- US-A1- 2016 238 415
- US-A1- 2016 245 673
- US-A1- 2022 026 243

## Description

This invention relates to an encoder apparatus, in particular a position measurement encoder apparatus comprising a scale and a readhead which are moveable relative to each other.

As is well known, a position measurement encoder apparatus typically comprises a scale having a series of features which the readhead can read to determine and measure relative position (and its derivatives such as velocity and/or acceleration). Encoders are typically categorised as being either incremental or absolute. A scale for an incremental encoder (such as the TONiC^{™} encoder available from Renishaw plc) comprises a series of generally periodic features which the readhead detects to determine a relative position and/or movement of the scale and readhead. One or more reference marks can be provided on the scale to provide reference positions from which the relative position of the scale and/or readhead can be counted. A scale for an absolute encoder (such as the RESOLUTE^{™} encoder available from Renishaw plc) comprises features defining unique positions along the scale length, for instance a series of unique absolute positions, and can enable a readhead to determine its absolute position on start-up without requiring any relative motion.

WO2017042570 discloses an example readhead for an absolute or incremental encoder, wherein the readhead comprises a position sensor comprising an array of sensor elements that are weighted (e.g. shaped/sized) according to a predetermined window function which is configured to reduce a particular type of error, in particular the encoder apparatus' sub-divisional error. As taught in WO2017042570, the weighting is configured such that the influence of the sensor output on the determined relative position predominantly decreases towards the ends of the sensor.

The present invention relates to an encoder readhead which comprises multiple sensors (e.g. an incremental sensor and a reference or absolute sensor) and particularly advantageous arrangements thereof.

According to a first aspect of the invention there is provided a position encoder readhead for reading a scale member, the readhead comprising: a primary sensor comprising a substantially continuous array of primary sensor elements for detecting a primary scale signal falling thereon, said array extending along a measuring dimension, a secondary sensor comprising at least a first secondary sensor element positioned along the measuring dimension at a location between the ends of the primary sensor, for detecting a secondary scale signal falling thereon; configured such that: i) the influence of the primary sensor elements on the position signal output by the primary sensor varies along the measuring dimension (in other words, varies dependent on the position of the primary sensor element along the measuring dimension), according to a multimodal distribution that tapers (in other words, gradually diminishes) toward its ends; and ii) a first notional line can be identified that extends parallel to the measuring dimension and that passes through the at least first secondary sensor element and, on either side of the at least first secondary sensor element, passes through at least one primary sensor element.

Compared to the arrangements shown in WO2017042570 (such as the embodiment of Figure 21 which comprises an incremental sensor and a reference mark sensor), the design approach of the present invention provides for a more efficient use of the space occupied by the primary (e.g. incremental) and secondary (e.g. reference mark of absolute) sensors. Although the primary sensor of an encoder readhead according to the present invention departs away from the teaching of WO2017042570, and can therefore be more susceptible to the type of errors sought to be suppressed by WO2017042570, the inventors identified that adopting such a design approach for the sensors can help to provide a readhead improved in other ways. In particular, adopting the approach of the present invention can help to reduce the amount of noise present on the signal(s) output by the primary sensor compared to those designs described in WO2017042570, which in turn can help provide a readhead having reduced position jitter (or "jitter error").

As will be understood, noise presents as undesirable disturbance on a signal that is the consequence of physics and thermodynamics. The noise can, for instance, be measured as the root-mean-squared (RMS) sum of all the independent noise sources, examples of which include: thermal, amplifier and shot noise. Noise on the signal(s) output by the readhead's primary sensor can lead to "position jitter" (or "jitter error") in the position reported by the readhead. Although position jitter/jitter error can exist and can be problematic in all situations, it can be most apparent to an observer when the scale and readhead are held in a stationary/steady position relative to each other but the position reported by the readhead is unsteady. The effects of position jitter/jitter error can also be apparent when the position encoder is used in a servomechanism to control the position of two relatively members, and the servomechanism is using the output of the position encoder to try to hold the two relatively members in a stationary position - in such a case, position jitter/jitter error can result in the servomechanism causing the two relatively members to vary in position rather than hold still. Another example of when position jitter/jitter error can be a significant issue is when the readhead is used to read a scale member having incremental position features and one or more reference marks - position jitter/jitter error can result in an inconsistent positional relationship between the incremental and reference mark signals. As will be understood, noise and the associated position jitter/jitter error can exist in position encoder readheads that output analogue position signals (e.g. analogue Sine and Cosine signals) and as well as those that output digital position signals (e.g. those that produce a digital quadrature or a digital serial output such as digital words representing a unique position).

The primary sensor can comprise a one-dimensional array of primary sensor elements (extending along the measuring dimension). The secondary sensor could comprise an array of secondary sensor elements (e.g. a one-dimensional array of secondary sensor elements, for instance extending along the measuring dimension).

As will be understood, the array of sensor elements of the primary sensor is substantially continuous in that there are no substantial gaps between immediately adjacent sensor elements in said array. As will be understood, due to manufacturing tolerances the gaps between immediately adjacent sensor elements in the array might not be perfectly identical for every pair of immediately adjacent sensor elements in the array. Furthermore, due to particular designs of the primary and/or secondary sensors, the gaps between immediately adjacent sensor elements might deliberately not be the same for every pair of immediately adjacent sensor elements, and/or there might be one or multiple places where the gap between a pair of immediately adjacent sensor elements is greater than that of the majority of the other pairs of immediately adjacent sensor elements. Nevertheless, the invention is concerned with primary sensors for which there is no substantial gap between immediately adjacent sensor elements in the array of sensor elements. In particular, for the purposes of the invention and this document, the array of sensor elements of the primary sensor is substantially continuous in that for all pairs of immediately adjacent sensor elements in the array, the gap (measured along the measuring dimension) between the immediately adjacent sensor elements is no greater than 10% (and preferably no greater than 5%) of the total length of the primary sensor measured along the measuring dimension.

The influence of the primary sensor's sensor elements on the position signal output by the primary sensor could be controlled via electronic weighting. In a preferred embodiment, the influence of the primary sensor's sensor elements on the position signal output by the primary sensor is controlled via the effective sensing length (in a dimension perpendicular to the measuring direction) of the sensor elements. Accordingly, in a preferred embodiment, the primary sensor is configured such that the effective sensing areas of the primary sensor elements, varies along the measuring dimension, according to a multimodal distribution that tapers towards its ends. The effective sensing areas of the sensor elements could be dictated by the physical size of the sensor elements, and/or by one or more mask features configured to prevent light from reaching the entire physical sensing area of the sensor elements. Such mask(s) could be configured such that the effective sensing area of any one individual sensing element is continuous, or alternatively such mask(s) could be configured such each individual sensing element has a number of discrete sensing areas along its length, separated by blocked/masked regions, (e.g. such that the sensing area is spread along the sensor element's length). It can be preferred that the width of the sensor elements (as measured along the measuring dimension) are substantially the same for all sensor elements in the array. The primary sensor could be configured such that the effective sensing lengths of the primary sensor elements (as measured perpendicularly to the measuring dimension), vary along the measuring dimension, according to a multimodal distribution that tapers towards its ends.

In accordance with these embodiments of the invention, the sensing area of the entire primary sensor could be shaped such that the effective sensing lengths of the primary sensor elements (as measured in a direction perpendicular to the measuring dimension), vary along the measuring dimension, according to a multimodal distribution that tapers toward its ends. In other words, the primary sensor could be shaped such that the effective sensing lengths of the primary sensor elements (as measured in a direction perpendicular to the measuring dimension) vary dependent on the position of the primary sensor element along the measuring dimension.

Preferably the position encoder readhead is configured such for at least 15%, for example at least 25%, optionally at least 50%, preferably at least 75% of the length of the at least first secondary sensor element (measured perpendicular to the measuring dimension), said first notional line can be identified that extends parallel to the measuring dimension and that passes through the at least first secondary sensor element and, on either side of the at least first secondary sensor element, passes through at least one primary sensor element. It can be the case that the greater the proportion of the length of the at least first secondary sensor element for which said first notional line can be identified, the greater the benefit that can be obtained by the design approach of the present invention.

Although it is possible that said first notional line passes through only one sensor element of the primary sensor on either side of the of the at least first secondary sensor element, it will generally be the case, especially for those configurations that benefit most adopting the design approach of the present invention, that said line will pass through a group of multiple sensor elements of the primary sensor on either side of the at least first secondary sensor element. Accordingly, optionally the position encoder readhead is configured such that said first notional line that passes through the at least first secondary sensor element and, on either side of the at least first secondary sensor element, passes through a group of at least X primary sensor elements, where X is at least 5% of the total number of sensing elements in the primary sensor's array of sensing elements, more preferably where X is at least 10% of the total number of sensing elements.

It can be preferred that the position encoder readhead is configured such that said multimodal distribution tapers between its peak and trough regions. For example, the sensing area of the primary sensor could be shaped such that the multimodal distribution tapers between its peak and trough regions. Accordingly, such tapering can provide for a smooth transition between the peak and trough regions. This can be advantageous because it helps to reduce system/position error, especially when the signal falling on the sensor is non-optimal (e.g. distorted)..

The above-mentioned tapering (e.g. tapering towards the ends of the primary sensor and/or the tapering between the peak and trough regions) could be linear tapering. Optionally, such tapering could be non-linear.

It can be preferred that the at least first secondary sensor element is substantially centrally positioned with respect to the primary sensor along the measuring dimension. This can be beneficial, for instance, when you have a non-uniform optical pattern falling on the sensor plane (e.g. due to the signal being formed from a point light source). In such a case, placing the at least first secondary sensor element substantially centrally with respect to the primary sensor along the measuring dimension means provides the least susceptibility to errors induced by poor build and/or installation of the readhead, for example.

The at least first secondary sensor element could be arranged beside the primary sensor, at least predominantly (and optionally, fully) on a first side of a notional centre-line of the primary sensor that extends parallel to the measuring dimension.

In accordance with the present invention, the at least first secondary sensor element can at least partially (and optionally, fully) sit within a trough-shaped section of the primary sensor. In the case in which the at least first secondary sensor element is substantially centrally positioned with respect to the primary sensor along the measuring dimension, the at least first secondary sensor element can at least partially (and optionally, fully) sit within a centrally-located trough-shaped section of the primary sensor.

The secondary sensor can comprise at least a second secondary sensor element. The at least second secondary sensor element can be positioned along the measuring dimension at a location between the ends of the primary sensor. Optionally, the at least second secondary sensor element is arranged beside the primary sensor at least predominantly (and optionally, fully) on a second side of said notional centre-line of the primary sensor that extends parallel to the measuring dimension.

Preferably, the readhead is configured such that a second notional line can be identified that extends parallel to the measuring dimension and that passes through the second secondary sensor element and, on either side of the at least second secondary sensor element, passes through at least one primary sensing element. As with the first secondary sensor element and first notional line (described above), it can be preferred that the readhead is configured such that for at least 50%, optionally at least 75%, preferably at least 95% of the length of the at least second secondary sensor element (measured perpendicular to the measuring dimension), said second notional line can be identified that extends parallel to the measuring dimension and that passes through the at least second secondary sensor element and, on either side of the at least second secondary sensor element, passes through at least one primary sensing element. As with the first secondary sensor element and first notional line (described above) it will generally be the case, especially for those configurations that want to benefit the most from the design approach of the present invention, that said second notional line will pass through a group of sensor elements of the primary sensor on either side of the at least second secondary sensor element. Accordingly, optionally the position encoder readhead is configured such that said second notional line that passes through the at least second secondary sensor element and, on either side of the at least second secondary sensor element, passes through a group of at least X primary sensor elements, where X is at least 5% of the total number of sensing elements in the primary sensor's array of sensing elements, more preferably where X is at least 10% of the total number of sensing elements.

As with the at first secondary sensor element, it can be preferred that the at least second secondary sensor element is substantially centrally positioned with respect to the primary sensor along the measuring dimension. Accordingly, the readhead can be configured such that the at least second secondary sensor element at least partially (and optionally, fully) sits within a centrally located trough-shaped section of the primary sensor located.

The primary sensor can be configured such that the influence of the primary sensor elements on the position signal output by the primary sensor, varies along the measuring dimension according to a bimodal distribution that tapers toward its ends. Optionally, the sensing area of the entire primary sensor can be shaped such that the effective sensing lengths of the sensor elements (as measured in a direction perpendicular to the measuring dimension) vary along the measuring dimension according to a bimodal distribution that tapers toward its ends.

The variation of the influence of the primary sensor on the position signal output thereby can be substantially symmetrical about a notional centre line of the primary sensor that extends perpendicular to the measuring dimension. This can be preferred, to help reduce errors caused by dephasing of the signals output by the primary and secondary sensors caused by relative yaw of scale and readhead (i.e. rotation about an axis normal to the scale). Accordingly, the shape of the sensing area of the entire primary sensor could be substantially symmetrical about a notional centre line of the primary sensor that extends perpendicular to the measuring dimension. As explained in more detail below, the shape of the sensing area of the entire primary sensor could be non-symmetrical about a notional centre line of the primary sensor that extends parallel to the measuring dimension, and in some circumstances this could be beneficial, e.g. if the footprint of light falling at the plane of the primary sensor is not symmetrical.

According to the invention, the output of the primary sensor is dependent on the relative position of the readhead and a scale along the measuring dimension. The readhead can be configured such that the signal output by the secondary sensor is dependent on the relative position of the readhead and scale (e.g. in any one or more of the six relative degrees of freedom - i.e. of the three linear and three rotary degrees of freedom). The readhead could be configured such that the signal output by the secondary sensor is dependent on the relative position of the readhead and scale along the measuring dimension, and/or along a different degree of freedom (e.g. in one or both dimensions perpendicular to the measuring dimension, and/or about an axis of rotation). In an alternative embodiment, the output of the secondary sensor is used to determine something other than information concerning the relative position of the scale and readhead, e.g. the secondary sensor could be configured to sense a scale-type identifier, which could, for instance be used to program the readhead (e.g. as described in WO2010/116145).

The primary sensor could comprise an incremental position sensor. Accordingly, the substantially continuous array of primary sensor elements could comprise a substantially continuous array of incremental position sensor elements. Accordingly, the primary scale signal could comprise an incremental scale signal. The primary scale signal could comprise a fringe field, for example an interference fringe. The array of sensor elements of the primary sensor could form an electrograting comprising two or more sets of interdigitated secondary sensor elements, each set being configured to detect a different phase of a fringe field. The readhead could comprise one or more diffraction gratings for producing said interference fringe.

The secondary sensor could comprise a reference mark sensor. Accordingly, the at least first secondary sensor element could comprise an at least first secondary reference mark sensor element. Accordingly, the secondary scale signal could comprise a reference mark signal. The secondary sensor could comprise an absolute position sensor. Accordingly, the secondary scale signal could comprise an absolute position signal.

The primary and secondary scale signals could be substantially the same/identical signals. The primary and secondary scale signals could be part of one and the same signal formed by a scale member which the readhead is configured to read (e.g. by the same scale features on a scale member which the readhead is configured to read). For instance, as explained in more detail below, the position features from which the secondary scale signal is produced, could be at least partially (and for instance fully) embedded within the series of position features from which said primary scale signal is produced. Accordingly, and especially in the case that the position features from which the secondary scale signal is produced are fully embedded within the series of position features from which said primary scale signal, the primary and secondary signals falling on the primary and secondary sensors can be the same/identical. Of course, the primary and secondary signals need not necessarily be the same/identical, even if they are formed by the same features on the scale (for example, even when the position features from which the secondary scale signal is produced are fully embedded within the series of position features from which said primary scale signal). For instance, optics within the readhead (e.g. a diffractive optic, such as a diffraction grating, and/or a refractive optic, such as lens), could be configured to manipulate the signal from the scale such that the primary signal falling on the primary sensor is different to the secondary signal falling on the secondary signal. Indeed, it can be preferred that the primary signal falling on the primary sensor is different to the secondary signal falling on the secondary signal in order to provide primary and secondary signals which are tailored for their specific purposes.

The sensor elements of the primary sensor could comprise photo-sensitive elements. The at least first secondary sensor element of the secondary sensor could comprise photo-sensitive elements. As will be understood, the sensor elements of the primary and/or secondary sensors could be different a type of sensor, e.g. a magnetic, inductive or capacitive sensor. The sensor elements of both the primary and secondary sensors could both be the same type of sensor (e.g. they could both be photo-sensitive elements), although this need not necessarily be the case.

The primary sensor and secondary sensor could be provided on different substrates (e.g. different semiconductor substrates, e.g. silicon). Optionally, they are provided on the same substrate (e.g. the same semiconductor substrate), which can aid manufacturing/assembly of the readhead.

The position encoder readhead could be configured to read a linear scale. The position encoder readhead could be configured to read a rotary scale.

According to a second aspect of the invention there is provided a position encoder apparatus comprising: a readhead according to any of the above or below described embodiments; and a scale comprising at least one series of (e.g. primary) position features from which said primary scale signal is produced. Said series of (e.g. primary) position features could comprise a series of generally periodically arranged features. Said series of (e.g. primary) position features could define an incremental scale. Said series of (e.g. primary) position features could define an absolute scale. As is known, said series of position features could define a hybrid incremental and absolute scale (e.g. as described in WO2002/084223). As described in WO2002/084223, such a scale is essentially an incremental scale with absolute position information embedded therein. Depending on the particular implementation, the absolute position features could form said primary scale signal, or the absolute position features could form said secondary scale signal.

The scale could comprise one or more (e.g. secondary) (e.g. position) features from which the secondary scale signal is produced. The secondary scale signal could be produced from (e.g. primary) position features which also are used to produce the primary scale signal.

Said (e.g. secondary) (e.g. position) features from which the secondary scale signal is produced, could be at least partially embedded within the series of position features from which said primary scale signal is produced. Said (e.g. secondary) (e.g. position) features from which the secondary scale signal is produced could extend across the entire width of the track containing the (e.g. primary) position features from which said primary scale signal is produced (the width of the track being in the dimension perpendicular to the measuring dimension/perpendicular to the extent of the series of features). However, this need not necessarily be the case, and the (e.g. secondary) (e.g. position) features from which the secondary scale signal is produced could extend only partially across the width of the track containing the (e.g. primary) position features from which said primary scale signal is produced. Optionally, the (e.g. secondary) (e.g. position) features from which the secondary scale signal is produced are contained is at least two rows that extend along the measuring dimension (along the extent of the series of the (e.g. primary) position features from which said primary scale signal is produced). Said at least two rows can be laterally separated (e.g. spaced apart in a dimension perpendicular to the measuring dimension).

Said one or more reference features could be embedded within the series of position features. The scale could comprise one or more features defining absolute scale position information. Said features defining absolute scale position information could be embedded within said series of position features.

The position encoder apparatus could be linear position encoder apparatus. The position encoder apparatus could be rotary position encoder apparatus.

Embodiments of the invention will now be described, by way of example only, with reference to the following drawings, in which:
Figure 1 shows a first example position encoder apparatus comprising a readhead according to the present invention;
Figure 2 schematically illustrates optical components located within the readhead of Figure 1 according to a first embodiment of the invention;
Figure 3 illustrates an example electrograting sensor;
Figure 4a illustrates example reference mark signals from the reference mark photodiodes of the readhead of Figures 1 and 2, and Figure 4b illustrates a difference signal obtained therefrom;
Figure 5a illustrates the arrangement of the incremental and reference mark sensor elements of the readhead of Figure 1 and 2;
Figure 5b is a graph illustrating how the influence *I* of the individual sensor elements on the position signal output by the incremental sensor of Figure 5a varies along the array of sensor elements of the incremental sensor;
Figure 6 schematically illustrates the additional sensing area that is achieved by adopting the approach of the present invention;
Figure 7a illustrates a first alternative configuration of the incremental and reference mark sensor elements according to the present invention;
Figure 7b is a graph illustrating how the influence *I* of the individual sensor elements on the position signal output by the incremental sensor of Figure 7a varies along the array of sensor elements of the incremental sensor;
Figure 8a illustrates a second alternative configuration of the incremental and reference mark sensor elements according to the present invention;
Figure 8b is a graph illustrating how the influence *I* of the individual sensor elements on the position signal output by the incremental sensor of Figure 8a varies along the array of sensor elements of the incremental sensor;
Figure 9a illustrates a third alternative configuration of the incremental and reference mark sensor elements according to the present invention;
Figure 9b is a graph illustrating how the influence *I* of the individual sensor elements on the position signal output by the incremental sensor of Figure 9a varies along the array of sensor elements of the incremental sensor;
Figure 10a illustrates a fourth alternative arrangement of the incremental and reference mark sensor elements according to the present invention;
Figure 10b is a graph illustrating how the influence *I* of the individual sensor elements on the position signal output by the incremental sensor of Figure 10a varies along the array of sensor elements of the incremental sensor;
Figures 11a and 11b illustrate an embodiment of the present invention, identical to that of Figures 1 and 2, except for the reference mark configuration on the scale;
Figures 12a and 12b illustrate an alternative embodiment of the invention implemented for use with an absolute scale;
Figures 13a to 13d schematically illustrate the effect of a reference mark on the position signal due to a mismatch in the period of the scale signal and the incremental sensor period; and
Figure 14 illustrates a fifth alternative arrangement of the incremental and reference mark sensor elements according to the present invention.

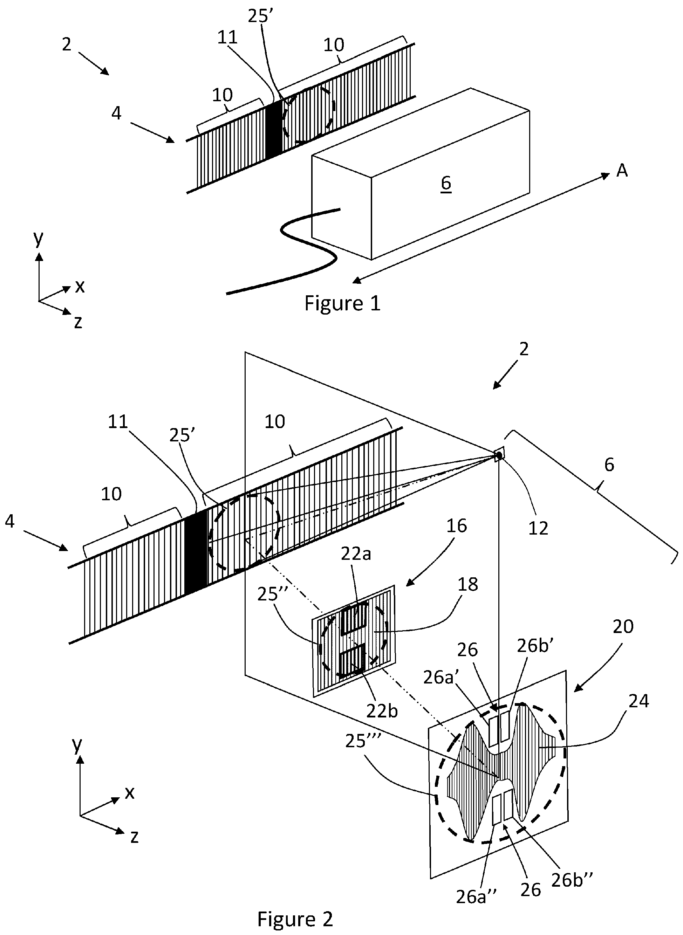

With reference to Figures 1 and 2 there is shown a first example position encoder apparatus 2 comprising a readhead 6 according to the present invention. The encoder apparatus comprises a scale 4 and a readhead 6. Although not shown, in use the readhead 6 can be fastened to one part of a machine and the scale 4 to another part of the machine such that said parts are movable relative to each other along a degree of freedom. The readhead 6 is used to measure the relative position of itself with respect to the scale 4 along the dimension illustrated by arrow A in Figure 1, i.e. along the X-dimension in the orientation shown, and hence can be used to provide a measure of the relative position of the two movable parts of the machine along the X-dimension. In this embodiment the two parts of the machine (and hence the scale 4 and readhead 6) are configured to move relative each other along a linear degree of freedom, in particular along the direction illustrated by arrow A/along the X-dimension. Accordingly, in the embodiment described the encoder apparatus 2 is what is commonly referred to as a linear position encoder apparatus. However, as will be understood, the invention is equally applicable for use in readheads for a rotary position encoder apparatus; e.g. a ring or disc encoder apparatus which are configured to measure the relative rotational position of the scale and readhead about an axis of rotation.

The readhead 6 communicates with a processing device such as a controller (not shown) via a wired and/or wireless communication channel. As will be understood, processing devices can include bespoke processors configured for the specific application (e.g. a field programmable gate array "FPGA") as well as more generic processors which can be programmed (e.g. via software) in accordance with the needs of the application in which it is used. The readhead 6 can report the signals from its sensors (described in more detail below) to the controller which then processes them to determine position information and/or the readhead 6 can itself process the signals from its sensors and send position information to the controller. In another embodiment, an intermediate unit, e.g. an interface unit, can be located between the readhead 6 and the controller. The interface unit can facilitate communication between the readhead 6 and controller. For example, the interface unit could be configured to process readhead signals and provide position information to the controller.

The scale 4 comprises a plurality of scale/position features. In the embodiment described the scale 4 is an incremental scale, comprising a single track comprising a generally periodic arrangement of incremental position features 10. In the embodiment described the scale 6 also comprises a reference mark 11 embedded within the same track as the incremental features 10.

In this embodiment, the encoder apparatus is an optical, diffraction-based encoder. The incremental position features 10 comprises a series of periodic scale features which form a diffraction grating. The scale 4 could be what is commonly referred to as an amplitude scale or a phase scale. As will be understood, if it is an amplitude scale then the incremental position features 10 (and optionally the reference mark 11) are configured to control the amplitude of light transmitted toward the readhead 6 (e.g. by selectively absorbing, scattering and/or reflecting the light), whereas if it is a phase scale then the incremental position features 10 (and optionally the reference mark 11) are configured to control the phase of light transmitted toward the readhead (e.g. by retarding the phase of the light). In the present embodiment, the incremental position features 10 and the reference mark 11 are amplitude scale features, and the light interacts with the incremental position features 10 to generate diffracted orders. As will be understood, it is not necessary for both the incremental and reference mark features to both be amplitude features or both be phase features, e.g. the incremental position features could be phase features and the reference mark could be an amplitude feature. Also, it is not necessary for both the incremental and reference mark features to both be optical features. For instance, the incremental features could be optical features and the reference mark feature could be a magnetic feature, in which case the primary (incremental) sensor 24 can comprise an optical/photo-sensitive sensor and the secondary (reference mark) sensor 26 can comprise a magnetic sensor.

As shown in Figure 2, in this embodiment the readhead 6 (the body/physical structure of which is not shown for ease of illustration) comprises a light source 12 (which is configured to illuminate a portion of the scale 4 - illustrated by the footprint outline 25'), an optical device 16 and a sensor unit 20. Reflected light from within said footprint on the scale forms a footprint of scale light 25" on the optical device 16, and light within said footprint 25" is relayed to the sensor unit 20. In particular, the optical device 16 comprises a diffraction grating 18 and first 22a and second 22b optical focussing (e.g. imaging) elements. In the embodiment described the optical focussing (e.g. imaging) elements 22a, 22b comprise a diffractive lens, such as a Fresnel zone plate, but could instead comprise a refractive lens, such as cylindrical lens, or Fresnel lens. One or more additional lenses, beam splitters, mirrors or other optical elements (not shown) can be used to direct, control, and/or focus light to/from the scale 4. For instance, a lens (not shown) could be present between the light source 12 and scale to cause the light therefrom to be substantially collimated before it is emitted toward the scale 4.

As shown in Figure 2, a footprint 25‴ of light reflected from the scale 4 falls on the sensor unit 20. The sensor unit 20 comprises a primary sensor 24 and a secondary sensor 26. As explained in more detail below, the primary sensor comprises a substantially continuous array of primary sensor elements, the array extending along the readhead's measuring dimension (i.e. along the X-dimension in the orientation shown). In the embodiments described, the sensors/sensor elements are photo-sensitive ("optical") sensors/sensor elements, but this need not necessarily be the case. For instance, the primary and/or secondary sensors/sensor elements could instead be capacitive, magnetic, or inductive sensors/sensor elements.

In the embodiment described, the primary sensor 24 is an incremental sensor configured to detect an incremental signal produced by the scale's incremental features 10, and the secondary sensor 26 is a reference mark sensor configured to detect the reference mark 11 as it passes by relative to the readhead 6. The reference mark sensor 26 comprises, in this embodiment, four sensor elements: a first reference mark sensor element 26a', a second reference mark sensor element 26a", a third reference mark sensor element 26b', and a fourth reference mark sensor element 26b''. The outputs of the first 26a' and second 26a" reference mark sensor elements are combined such that downstream electronics sees/treats their outputs as one signal (e.g. a first reference mark signal output). The outputs of the third 26b' and fourth 26b'' reference mark sensor elements are combined such that downstream electronics sees/treats their outputs as one signal (e.g. a second reference mark signal output). Accordingly, the reference mark sensor 26 comprises a so-called "split detector" comprising a first half formed by the first 26a' and second 26a" reference mark sensor elements and a second half formed by the third 26b' and fourth 26b'' reference mark sensor elements. However, as will be understood, the reference mark sensor need not comprise a split sensor, and could for instance comprise just a single reference mark sensor element.

As is well known and understood in the field of diffraction-based encoders (and for instance as described in WO2005/124282 and WO2017/042570) diffraction orders reflected by the scale 4 interact with the diffraction grating 18 so as to form an interference fringe pattern at the plane of the sensor unit 20 (and hence falls on the incremental sensor 24). Relative movement of the readhead 6 and scale 4 causes modulation/movement of the interference fringes relative to the readhead/incremental sensor 24, the output of which can be processed to provide an incremental up/down count which enables an incremental measurement of displacement. As will be understood, encoders are often configured to provide two signals in quadrature (that are 90 degrees out of phase from each other), and are commonly labelled as SIN and COS signals (even though they may not actually be sine or cosine signals). The quadrature signals can be interpolated to provide an accurate measurement of the position of the readhead to less than one period of the repeating scale pattern. The provision of such quadrature signals by an encoder apparatus is well known in order to provide an indication of direction as well as relative movement of the readhead and scale.

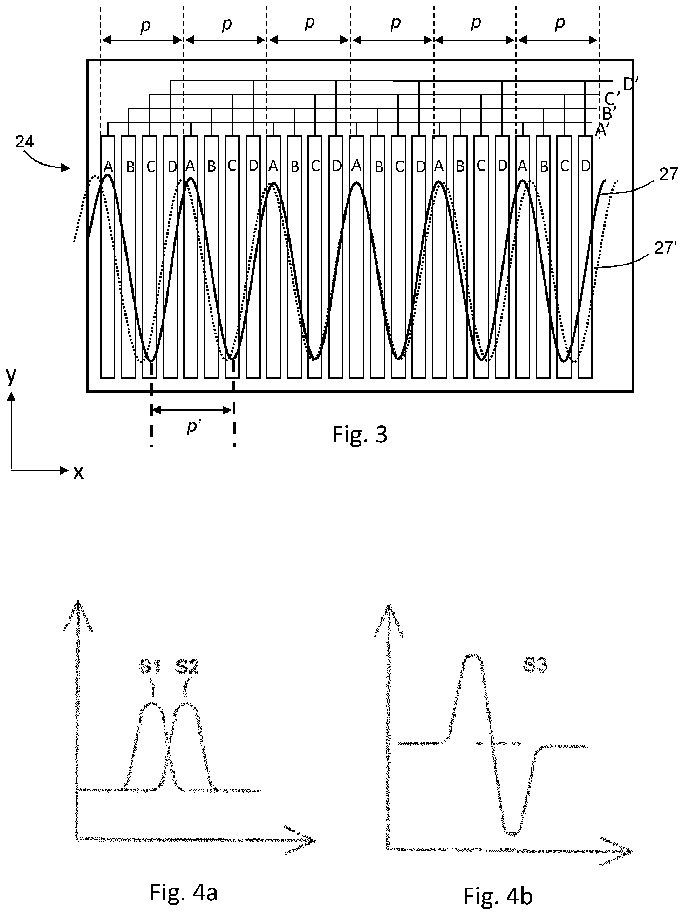

In the embodiment described, the incremental sensor 24 is in the form of an electrograting, which in other words is a photo-sensor array which comprises two or more sets of interdigitated/interlaced/interleaved photo-sensitive sensor elements (also referred to herein as "photodetectors" or "fingers"). Each set can, for example, detect a different phase of the interference fringe at the incremental sensor 24. An example of a standard/rectangular-shaped known electrograting is illustrated in Figure 3, in which the sensor elements of four sets of sensor elements (A, B, C and D) are interdigitated/interleaved to form an array of sensor elements, said array extending along the measuring dimension of the readhead (in this embodiment, along the X dimension). The sets of photodiodes are arranged in a repeating arrangement, having a period "p" (and hence a frequency "f" being 1/"*p*").

As shown, in the embodiment described, the array of individual sensor elements extends substantially parallel to the measuring dimension X of the incremental detector 24. Also, the individual fingers/photodiodes/sensor elements are substantially rectangular in shape, with their longer side extending perpendicular to the measuring dimension X. As will be understood, the invention is also applicable to other shaped and arranged sensor elements.

The output from each sensor element in a set is combined to provide a single output, thereby resulting in four channel outputs: A', B', C' and D'. These outputs are then used to obtain the quadrature signals SIN and COS. In particular, A'-C' is used to provide a first signal (SIN) and B'-D' is used to provide a second signal (COS) which is 90 degrees out of phase from the first signal. Although in the specific embodiment the electrograting comprises four sets of photodiodes providing four the channels A', B', C' and D', this need not necessarily be the case. For example, the electrograting could comprise two sets of photodiodes providing just two channels A' and B'. Furthermore, in this embodiment, the incremental detector 24 is non-aliased. However, as will be understood, the invention is equally applicable to aliased sensors (e.g. sensors in which the distance between the sensor elements in each set is greater than one fringe period).

In Figure 3, the interference fringe is represented by a line 27 which schematically illustrates the varying intensity of an ideal interference fringe across the incremental detector 24. As illustrated, the encoder apparatus is configured such that, in an ideal situation, at any one instant in time, all the incremental sensor elements in any one set detect the same phase of the interference fringe (if the fringe period *p',* and sensor period *p* are the same).

Turning now to the detection of the reference mark 11. In the embodiment described the reference mark 11 is formed by the removal of (or addition of extra) incremental features. Alternatively, it can comprise any pattern which can be differentiated from the incremental position features 10. For instance, the reference mark can have structure in the measuring dimension X and/or in the dimension perpendicular to the measuring dimension. For example, the reference mark may comprise an autocorrelator in which the reference mark forms a pattern interlaced with the incremental position features 10 and a matching mask is provided in the readhead, for example as described in WO2002/065061.

The optical focussing (e.g. imaging) elements 22a, 22b focuses (e.g. images) light reflected by the top and bottom portions of scale onto the plane of the sensor unit 20, such that when the readhead 6 passes over the reference mark 11 a change in the intensity of light reflected by the scale 4 is sensed by the reference mark sensor 26. As explained above, in the embodiment described, the reference mark sensor 26 is a so-called "split detector" (comprising a first half formed by the first 26a' and second 26a" reference mark sensor elements and a second half formed by the third 26b' and fourth 26b'' reference mark sensor elements). Figure 4a illustrates the outputs S1, S2 from the two halves of the split detector as the readhead moves along the scale. Signals S1 and S2 from the two halves of the split detector can be subtracted to form a signal S3 shown in Figure 4b. The position of the reference mark can be determined from the signal S3, for instance from where the falling edge of signal S3 crosses a known threshold in the reading direction. Although in this embodiment a split reference mark sensor is used to detect the reference mark, other types of reference mark sensor may be used. For example the outputs from three or more separate detector elements could be combined. In another alternative embodiment, the output of just a single reference mark sensor element could be used (e.g. a reference mark could be identified as being the position at which the output of the single reference mark sensor element crosses a predetermined threshold).

Signals from the primary/incremental sensor 24 and secondary/reference mark sensor 26 are processed by electronics (not shown) within the readhead 6 and/or within a device external to the readhead 6 so as to determine/monitor position information therefrom, as is well known in the field of encoders.

As taught in WO2017/042570, it can be beneficial to weight the output of the incremental sensor elements according to a window function, in particular in a way such that the influence of the sensor output on the determined relative position predominantly decreases towards the ends of the sensor in order to reduce sub-divisional error caused by undesirable frequencies in the signal falling on the incremental sensor. As also taught in WO2017/042570, reference mark sensors can be located beside the windowed incremental sensor, part-way between the ends of the incremental sensor (e.g. see Figure 21 of WO2017/042570). However, such a configuration leads to a large portion of light returned from the scale 4 not being sensed by the primary (e.g. incremental) sensor. The inventors have found that in certain circumstances it can be beneficial to depart from the configurations shown in WO2017/042570, for instance so as to facilitate a greater proportion of light returning from the scale 4 being sensed by the primary (e.g. incremental) sensor.

For instance, the inventors have found that whilst it is still beneficial for: i) the influence of the primary/incremental sensor elements to generally progressively reduce (i.e. taper) towards the ends of the incremental sensor (albeit, as explained in more detail below, for reasons other than that identified in WO2017/042570), and: ii) the reference mark sensor elements to be located between the ends of the incremental sensor along the measuring dimension, it can be beneficial if some of the incremental sensor elements are sufficiently long in the direction perpendicular to the measuring dimension such that they sit in the space to the sides of the reference mark sensor element(s).

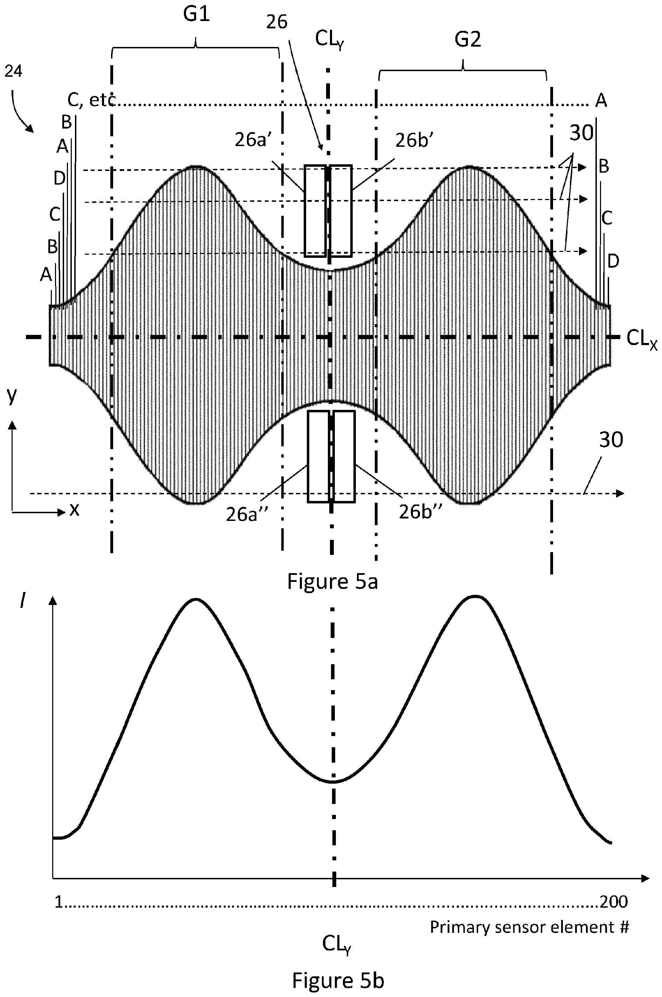

An example embodiment of such a sensor is illustrated in Figure 2, and also illustrated in more detail in Figure 5a. As shown, the incremental sensor 24 comprises a substantially continuous array of incremental sensor elements, said array extending along the measuring dimension X. In this embodiment, the incremental sensor 24 is an electrograting, and so as per the description above for Figure 3, the incremental sensor 24 comprises four sets of interdigitated/interleaved sensor elements: A, B, C and D. As will be understood, the invention is also applicable to non-electrograting sensor arrays, such as a linear CMOS (Complementary metal-oxide semiconductor) array. As shown in Figure 5a, there are two groups, G1, G2 of incremental sensor elements that are sufficiently long in the direction perpendicular to the measuring dimension such that they sit in the space to the sides of the reference mark sensor element(s). Accordingly, at least one notional line (e.g. see the example dashed-lines 30 in Figure 5a) can be identified that: i) extends parallel to the measuring dimension X of the readhead; ii) that passes through the reference mark sensor element(s); and, iii) on either side of the reference mark sensor element(s) 26a', 26a", 26b', 26b'', passes through at least one incremental sensor element.

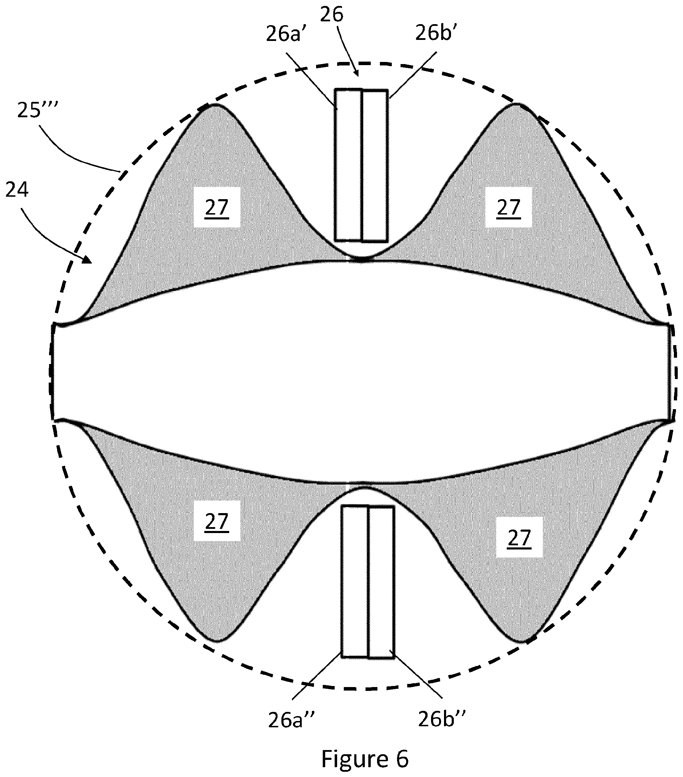

Extending at least some of the incremental sensor elements such that they sit in the space to the sides of the reference mark sensor element(s) can increase the amount of light sensed by the primary/incremental sensor 24, which in turn can reduce the amount of noise present on the signal output by the primary/incremental sensor 24, which in turn can reduce the amount of jitter error present in the position signal determined from the output by the primary/incremental sensor 24. For instance, the shaded areas 27 of Figure 6, represent (for the incremental sensor of Figures 2 and 5) the additional sensing area that is achieved compared to a design of incremental sensor where the incremental sensor elements do not sit in the space to the sides of the reference mark sensor element (e.g. as taught in WO2017/042570). As illustrated, a sensor according to the present invention makes much more use of the footprint 25‴ of available light reflected by the scale and falling on the sensor unit 20, thereby improving the reducing signal noise and the resulting position jitter/jitter error.

As clearly shown in Figure 5a, the lengths of the incremental sensor elements (A, B, C, D, etc), as measured in a direction perpendicular to the measuring dimension (i.e. along the Y dimension), vary along the measuring dimension X. Accordingly, the influence *I* of the individual sensor elements on the position signal output by the incremental sensor 24 varies along the array of sensor elements of the primary/incremental sensor 24 (i.e. varies along the measuring dimension X). Figure 5b is a graph illustrating how the influence *I* of the individual sensor elements on the position signal output by the incremental sensor 24 varies along the array of sensor elements of the primary/incremental sensor 24 (i.e. how the influence *I* of the individual sensor elements on the position signal output by the incremental sensor 24 varies along the measuring dimension X). In other words Figure 5b illustrates the "influence distribution" of the sensor of Figure 5a. As shown, the influence varies according to a multi-modal (in this embodiment bi-modal) distribution that tapers toward its ends. Such a multi-modal distribution is a result of the incremental sensor 24 being designed in a way to balance the wants of: i) having the reference mark sensor element(s) located at a position between the ends of the incremental sensor 24 optically superior, less sensitive to yaw of scale and readhead (i.e. rotation about an axis normal to the scale) which can cause dephasing of the signals output by the primary and secondary sensors; ii) reduce the influence of the incremental sensor elements towards the ends of the sensor to reduce measurement errors in the signal derived from their output that occur near the reference mark (as explained in more detail below); and iii) having as much light falling on the incremental sensor as possible so as to reduce signal noise and reduce jitter.

In the embodiment described, the influence *I* of the incremental sensor elements on the position signal output by the incremental sensor 24 varies due to differences in the physical lengths of the incremental sensor elements (measured perpendicular to the measuring dimension, i.e. measured along the Y-dimension). However, this need not necessarily be the case. For instance, a mask could be arranged over at least some of the incremental sensor elements to restrict (e.g. block) the amount of light falling thereon. The mask(s) could be configured such that the effective sensing area of any one individual sensing element is continuous, or the mask(s) could be configured such each individual sensing element has a number of discrete sensing areas, separated by blocked/masked regions, such that the sensing area is spread along the sensor element's length. Additionally or alternatively, the influence *I* of the incremental sensor elements on the position signal output by the incremental sensor 24 could be controlled via electronic weighting. As will be understood, for those incremental sensor elements that are co-positioned along the measuring dimension (X) with the reference mark sensor element(s), it might be that the lengths of the incremental sensor elements have to be physically shorter in order to enable siting of the reference mark sensor elements in accordance with the present invention, but for the other incremental sensor elements (that are no so co-positioned along the measuring dimension (X) with the reference mark sensor element(s)), there is more freedom for choosing how to control their influence *I* on the position signal output by the incremental sensor 24 (e.g. the designer can choose whether to do so via electronic weighting, masking and/or making the incremental sensor elements different lengths).

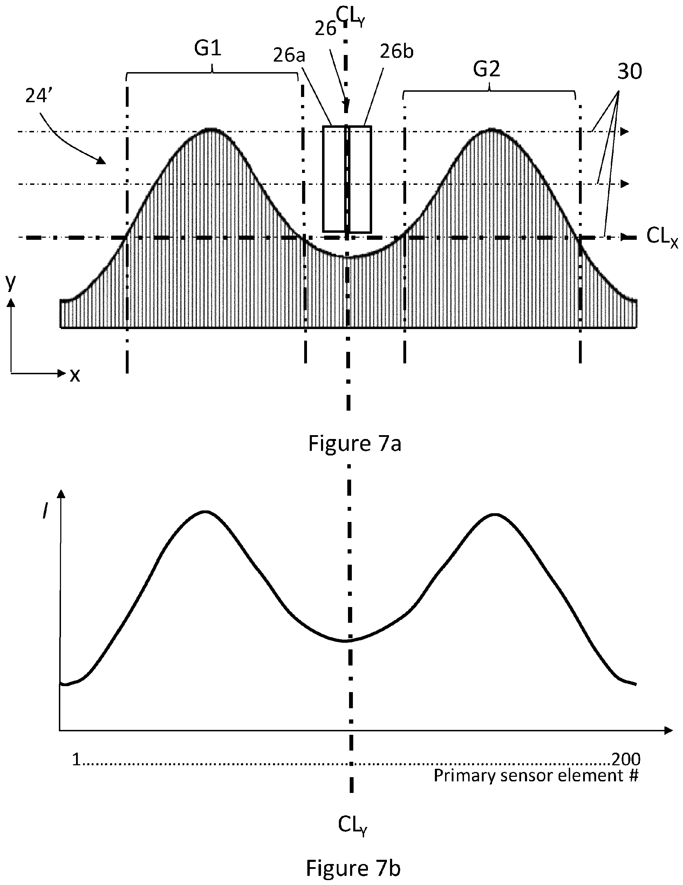

Examples of alternative sensor arrangements according to the invention are shown in Figures 7a, 8a, 9a and 10a. Figure 7b, 8b, 9b, and 10b show graphs illustrating how the influence *I* of the individual sensor elements varies along the array of sensor elements of the primary/incremental sensor 24 (in other words, Figures 7b, 8b, 9b and 10b illustrate the "influence distribution" of the sensors of Figures 7a, 8a, 9a and 10a respectively). As shown, in each of these embodiments, the primary sensor (in these embodiments the incremental sensor 24) is configured (in particular, shaped) such that: i) the influence on the position signal output (in particular, the effective sensing lengths, as measured in a direction perpendicular to the measuring dimension,) of the primary/incremental sensor elements varies along the measuring dimension, according to a multimodal distribution that tapers toward its ends; and ii) at least one notional line (e.g. dashed lines 30) can be identified that extends parallel to the measuring dimension X and that passes through the at least one secondary (in these embodiments - a reference mark) sensor element and, on either side of at least one secondary (e.g. reference mark) sensor element, passes through at least one primary (incremental) sensor element.

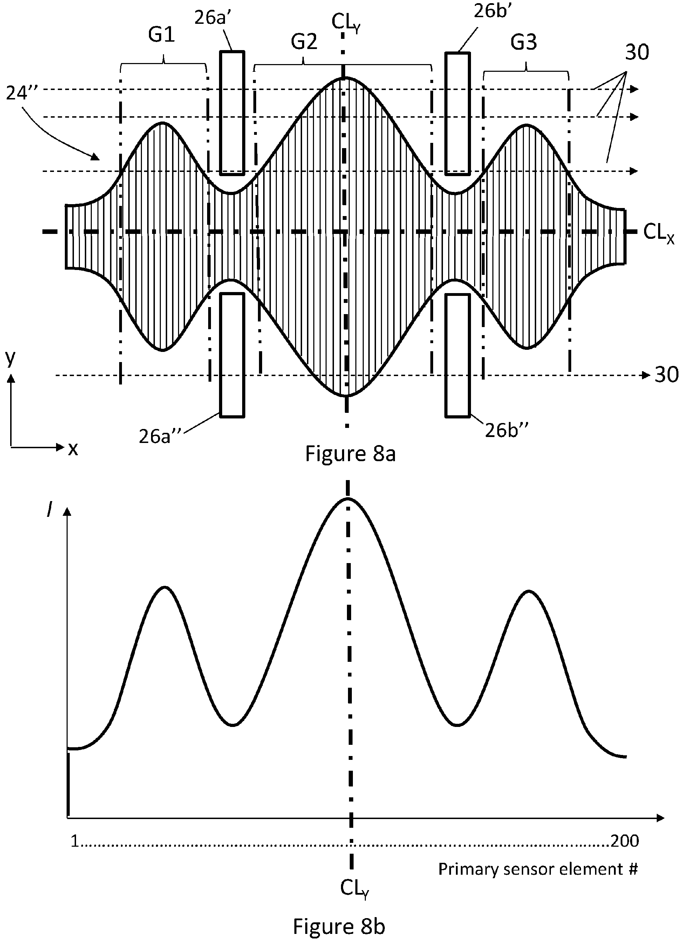

The embodiment of Figure 7a differs from that of Figure 5a (and Figures 8a, 9a and 10a) in that the shape of the incremental sensor 24' is not symmetrical about its centre-line CL_{X} that extends parallel to the measuring dimension X. Also, the reference mark sensor elements are located on only one side of the incremental sensor centre-line CL_{X} that extends parallel to the measuring dimension X.

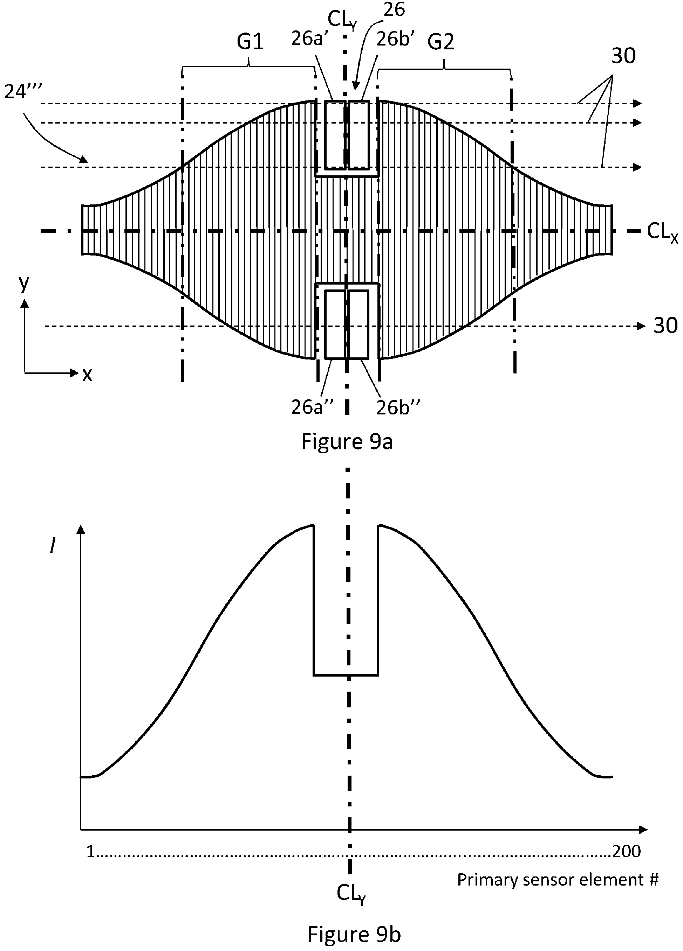

The embodiment of Figure 8a differs from that of Figure 5a (and Figures 7a, 9a and 10a), in that the primary sensor (in these embodiments the incremental sensor 24") is configured (in particular, shaped) such that influence on the position signal output (in particular, the effective sensing lengths, as measured in a direction perpendicular to the measuring dimension,) of the primary/incremental sensor elements varies along the measuring dimension, according to a tri-modal distribution (that tapers toward its ends). Like the embodiment of Figure 5a (and Figures 7a and 9a) the reference mark sensor 26 comprises a so-called "split detector" comprising a first half formed by the first 26a' and second 26a" reference mark sensor elements and a second half formed by the third 26b' and fourth 26b'' reference mark sensor elements. However, unlike the embodiment of Figure 5a (and Figures 7a and 9a), the first 26a' and second 26a" reference mark sensor elements forming the first half of the "split detector" are separated from the third 26b' and fourth 26b'' reference mark sensor elements forming the second half of the "split detector" by a group of incremental sensor elements G2. In this embodiment, as illustrated, at least one notional line (e.g. see dashed lines 30) can be identified that extends parallel to the measuring dimension and that passes through the at least one reference mark sensor element and, on either side of the at least one reference mark sensor element, passes through at least one primary sensor element (e.g. see groups G1, G2 and G3 of incremental sensor elements). As illustrated by this embodiment, it is not necessary for such a notional line to be identifiable for the entire length of the reference mark sensor element(s) (in this embodiment. The reference mark sensor elements extend further in the Y-dimension than all of the incremental sensor elements).

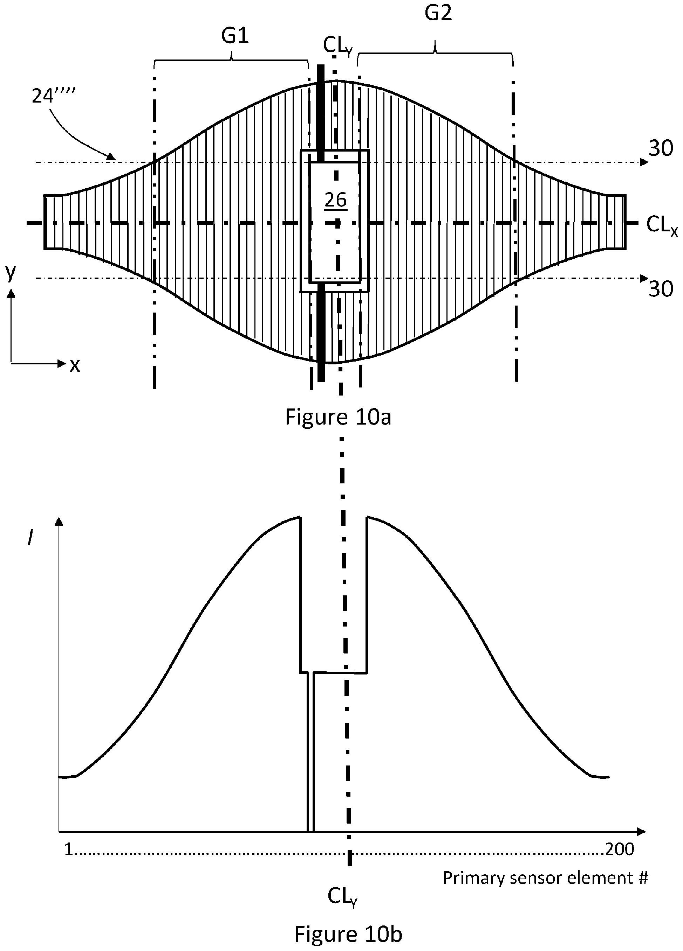

The embodiment of Figure 9a is very similar to that of Figure 5a. However, in the embodiment of Figure 5a (and also Figures 7a and 8a) the incremental sensor is configured such that its influence distribution (as illustrated by Figures 5b, 7b and 8b) tapers between its peak and trough regions, whereas this is not the case of the embodiment of Figure 9 (nor Figure 10). Whilst the embodiment of Figures 9 and 10 can provide for an even greater proportion of light falling on the incremental sensor compared to the embodiment of Figure 5, it has been found to design the influence distribution of the incremental sensor such that it tapers between the peak and trough regions because it helps to reduce system/position error, especially when the signal falling on the sensor is non-optimal (e.g. distorted)..

The embodiment of Figure 10a differs from that of the above-described embodiments in that the reference mark sensor 26 comprises a single senor element only. Also, the reference mark sensor 26 is fully embedded/surrounded by the substantially continuous array of incremental sensor elements of the incremental sensor 24ʺʺ. As shown, due to electrical connection lines to the sensor 26 (and/or for some other reasons, such as for manufacturing reasons), there is a small break in the continuity of the array of the sensor array, but the size of the gap as measured along the measuring dimension of the readhead (i.e. along the X axis) is less than 10% of the total length of the primary sensor, again measured along the measuring dimension, and so has a relatively insignificant effect on the metrological performance of the incremental sensor 24.

In all of the embodiments described above the variation of the influence of the primary/incremental sensor on the position signal output thereby is substantially symmetrical about a notional centre line CL_{Y} of the primary/incremental sensor that extends perpendicular to the measuring dimension X. Whilst this can be beneficial for various reasons, including minimising position errors, such a configuration is not necessary/essential.

Configuring the primary/incremental sensor such that the influence of the primary sensor elements on the position signal output varies along the measuring dimension according to a multimodal distribution (as opposed to having a unimodal distribution as promoted by WO2017/042570), can have an adverse effect on the sub-divisional error present in the position signal output by the primary/incremental sensor (and therefore is counter to the teachings of WO2107/042570). However, the benefit of reduced noise and jitter which can be achieved by adopting a multimodal distribution can outweigh the reduced sub-divisional error (SDE) performance. Furthermore, if desired, SDE can be compensated for in the downstream electronics (e.g. via mapping).

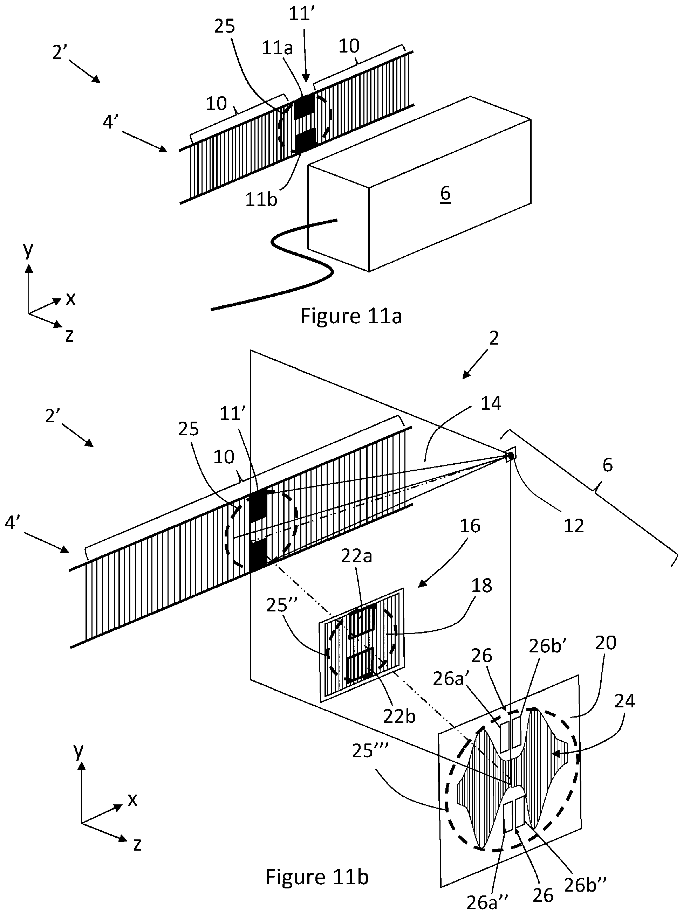

Figures 11a and 11b show an alternative embodiment of a position encoder apparatus 2' which is substantially identical to that of Figure 2 and like parts share the same reference numerals. In this embodiment the reference mark 11' does not extend fully across the width of the scale 4' (in the Y dimension) but instead comprises two separate reference mark regions 11a, 11b which are spaced apart along the Y dimension, but co-located along the measuring dimension X. As the readhead 6 passes the reference mark 11', the first reference mark region 11a is imaged onto the first 26a' and third 26b' reference mark sensor elements, and the second reference mark region 11b is imaged onto the second 26a" and fourth 26b'' reference mark sensor elements. Accordingly, the incremental position features 10 extend continuously without any break between them, albeit having reduced length in the region of the reference mark 11'. This can help to increase the strength of the incremental signal produced at the incremental sensor 24 and reduce reference-mark induced errors.

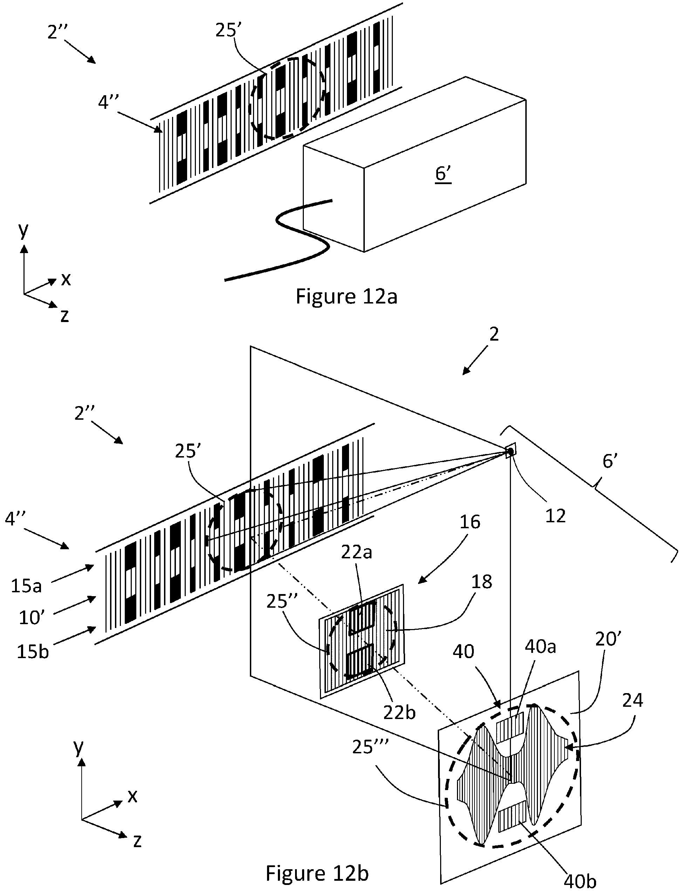

In all of the embodiments described above, the primary sensor comprises an incremental sensor and the secondary sensor comprises a reference mark sensor. Figures 12a and 12b show a position encoder apparatus 2' according to an alternative embodiment wherein absolute position information is embedded within the incremental scale. The position encoder apparatus 2' shares many similarities with that of Figure 2 and like parts share the same reference numerals. In this embodiment the scale 4" comprises (as per the embodiments described above) a series of incremental features wherein absolute code features are embedded therein along first 15a and second 15b rows extending along the length of the scale, on either side of a row of pure incremental features 10'.

The sensor unit 20' comprises a primary (incremental) sensor 24 and also an absolute sensor 40, comprising first 40a and second 40b photodiode arrays (in this embodiment they are one-dimensional photodiode arrays, but they could be two-dimensional). The first optical focussing (e.g. imaging) element 22a causes an image of the first row containing absolute scale features 15a to be formed on the first photodiode array 40a and the second optical focussing (e.g. imaging) element 22b causes an image of the second row containing absolute scale features 15b to be formed on the second photodiode array 40b. In the embodiment described the absolute code of the first 15a and second 15b rows of absolute scale features are identical. Accordingly, the outputs of the first 40a and second 40b photodiode arrays can be combined and treated as one. As is known, and for example described in US7499827, US5279044 and US10989567, the image(s) of the first 15a and second 15b rows of absolute scale features can be processed in order to extract the absolute/unique code so as to thereby determine an absolute position. The absolute position can be combined with the incremental position determined from the incremental detector 24 to provide a fine-pitch absolute position. Optionally, once the absolute position has been determined, subsequent positions can be determined solely by monitoring the output from the incremental detector 24.

In the embodiment described, the first 15a and second 15b rows of absolute scale features also comprise the finer pitch/period incremental features in the spaces between the coarser pitch/period absolute features (although this need not necessarily be the case). As an example, the coarse features which encode the absolute position information could have a nominal period of approximately 32µm and the finer pitch/period incremental features can have a period of approximately 8µm. Accordingly, the first 15a and second 15b rows of absolute scale features also contribute to the formation of the incremental position signal within the footprint of light 25‴ falling on the sensor unit 20'.

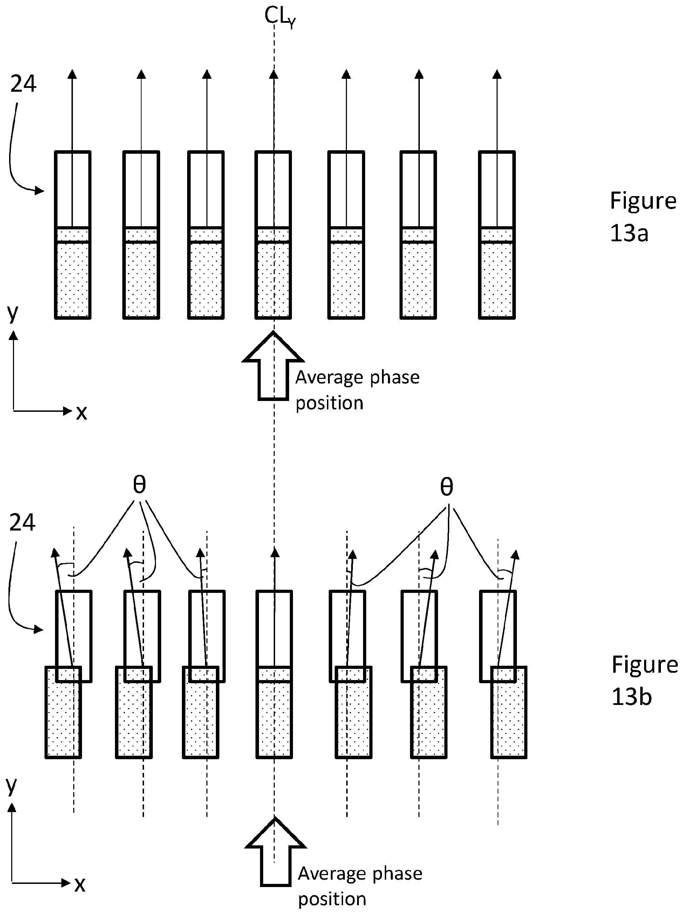

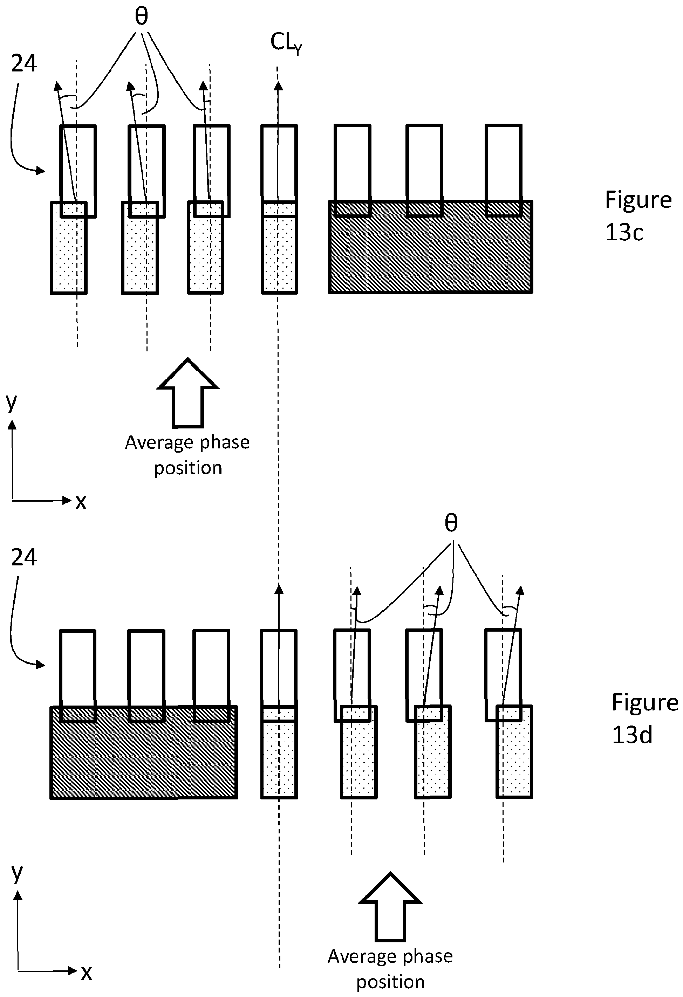

In all of the embodiments described above, the primary sensor is configured (e.g. shaped) such that: the influence on the position signal output (e.g. the effective sensing lengths as measured in a dimension perpendicular to the measuring dimension) of the primary sensor elements, varies along the measuring dimension, according to a multimodal distribution that tapers toward its ends. The benefit of configuring the influence of the sensor such that it tapers towards it ends is that it can help to reduce errors in the position signal in the vicinity of the reference mark. This will be explained with reference to Figures 3 and 13. As described above, Figure 3, shows an ideal scenario in which an interference fringe represented by line 27 has a purely sinusoidally varying intensity and in which the fringe period p' matches the electrograting period "p" (e.g. the period of the centres of two like photodiodes, such as two "A" photodiodes), thereby providing an integer number of repeats of the periodic pattern of the interference fringe per channel. In other words, the spatial frequency of the interference fringe (e.g. 1/p') is an integer multiple of the spatial frequency of the repeat of the sets of photodiodes (e.g. 1/p) (and in particular, in this case the spatial frequency of the interference fringe is equal to the spatial frequency of the repeat of the sets of photodiodes). Various situations can lead to fringe period p' not matching the sensor period p. For example, a change in the separation of the readhead 6 and scale 4 can cause a change in the fringe period p' falling on the sensor (e.g. due to magnification effects causing the interference fringe to stretch or shrink depending on whether the separation increases or decreases). Distortion of the fringe field (e.g. caused by quality of optics) can also cause a mismatch between the fringe period and sensor period. Such a change in the period of the interference fringe is illustrated by the dotted line 27' which schematically illustrates the varying intensity of an interference fringe across the incremental detector 24. As can be seen, there is now a mismatch between the fringe period (of line 27') and the electrograting period, the effect of which will now be described with reference to Figure 13.

Figure 13 schematically illustrates a small central portion of a sensor array, such as the incremental sensor 24 described above, represented by the blank rectangular shapes. The optical signal (e.g. interference fringe) as it falls on the sensor is represented by the dot-filled rectangular shapes. The optical signal is shown only partially overlapping the incremental sensor's sensor elements in the Y dimension so that the relative position of the optical signal and the incremental sensor's sensor elements can easily be seen, but as will be understood, in normal operation the optical signal will totally overlap the incremental sensor's sensor elements in the Y dimension.

Figure 13a represents the ideal scenario in which the fringe period matches the sensor period (i.e. as per line 27 of Figure 3). Figure 13b represents the scenario in which the fringe period no longer matches the sensor period (e.g. due to above-described magnification effects and a change in separation of the readhead and scale) (i.e. as per line 27' of Figure 3). As can be seen in Figure 13, the phase difference θ between the interference fringe and the individual sensor elements of the incremental sensor 24 increases with distance from the sensor's centre-line CL_{Y} (i.e. the centre-line that extends perpendicular to the measuring dimension X). However, because the change in phase difference is symmetrical about the sensor's centre-line CL_{Y}, the phase difference averages out across the sensor and so, as per Figure 13a, the average phase position of the signal is coincident with sensor's centre-line CL_{Y}, causing no position error.

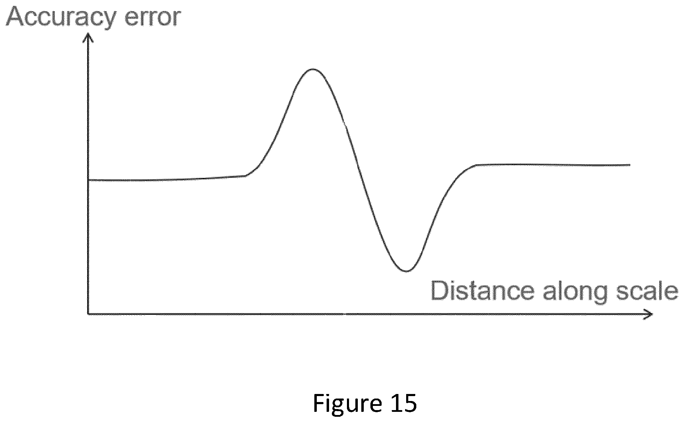

However, as illustrated by Figures 13c and 13d, this is no longer the case when the readhead passes over the reference mark or contamination on the scale. As illustrated, as the reference mark (represented by the striped-filled box in Figure 13c and 13d), sweeps across the sensor 24, the change in phase difference of the incremental position signal is no longer symmetrical about the sensor's centre-line CL_{Y}, thereby causing a shift in the average phase position. This in turn causes the position signal determined from the output of the incremental sensor 24 to be initially shifted in one direction along the measuring dimension X and subsequently along the opposite direction along the measuring dimension as the readhead passes over the portion of the scale containing the reference mark, leading to a varying error in the position signal as illustrated in Figure 15 as the readhead passes over the reference mark/contamination on the scale.

As can be seen, the phase difference increases with distance away from the incremental sensor's centre-line CL_{Y}. Accordingly, configuring the incremental sensor such that the influence of the incremental sensor elements on the position signal output gradually tapers towards it ends reduces the magnitude of the above-described variation in the error in the position signal.

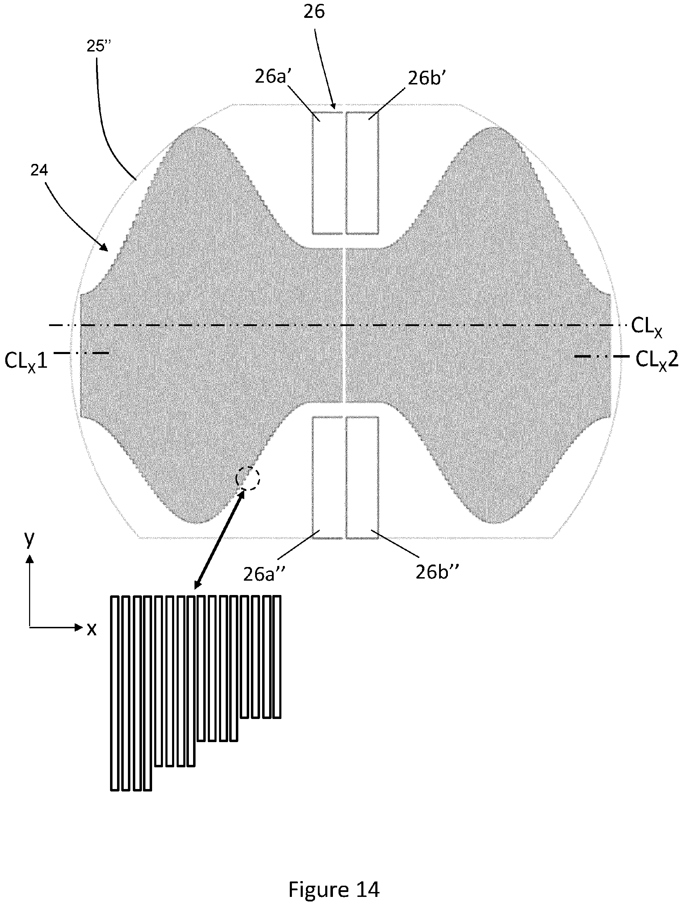

Figure 14 illustrates an embodiment of the invention which is very similar to that of Figure 5a, except that in order to accommodate a non-circular shape of the footprint‴ of light reflected from the scale (not shown in this embodiment), the primary sensor 24 (represented by the grey-shaded area) is not symmetrical about the primary sensor's centreline CL_{X} that extends parallel to the measuring dimension. As can be seen centrelines CL_{X}1 and CL_{X}2 of the sensor elements at the end of the primary sensor 24 are not co-axial with the centreline of the sensor elements at the middle of the primary sensor 24 (which happens to be co-axial with the primary sensor's centreline CL_{X}). Accordingly, the centrelines CL_{X}1 and CL_{X}2 of the sensor elements at the end of the primary sensor 24 are laterally offset to the centreline of the sensor elements at the end of the primary sensor 24, in the dimension perpendicular to the measuring dimension.

The embodiment of Figure 14 also differs from the embodiment of Figure 5a in that the central trough section is flat. The embodiment of Figure 14 also differs from the embodiment of Figure 5a in that the incremental sensor of Figure 14 is configured such that the effective sensing lengths of the sensor elements steps down/up in groups of individual sensor elements (in this embodiment, in groups of 4 sensor elements). Accordingly, the above-described tapering of the sensor's influence distribution between its peak and trough regions will also be stepped in form. If the sensor is an electrograting type sensor (as described above), then the sensor can be configured that within one group of adjacent sets of sensor elements making up the electrograting (e.g. a group comprising one "A" sensor element, one "B" sensor element, one "C" sensor element, and one "D" sensor element,) the sensor elements have the same length.

The embodiments described above comprise a diffraction-based incremental encoder, whereby diffraction orders from the scale interact with a diffraction grating in the readhead to produce an interference fringe at the incremental sensor. As will be understood, other types of incremental encoders exist, which generate a signal at the sensor from diffraction orders in different ways. Also, other types of incremental encoders exist which do not rely on diffraction orders to generate the signal at the incremental sensor, but instead rely on other optical phenomena/properties, e.g. that rely on a shadow-cast or image of the scale being formed on the sensor. Accordingly, the present invention is not limited to the type of encoder depicted in the above described embodiments but can also be used in these other types of encoders too.

In the embodiments described above, the primary sensor comprises an incremental sensor. However, this need not necessarily be the case. For instance, the primary sensor could comprise an absolute sensor, e.g. an image sensor, for sensing absolute position codes on the scale. In such a case, the secondary sensor(s) could comprise, for instance, one or more supplemental sensors, e.g. for sensing something else, for instance for sensing another aspect of the scale such as the relative pitch of the readhead and scale, or for instance, for sensing functional safety limit marks on the scale.

## Claims

1. A position encoder readhead (6) for reading a scale member (4), the readhead comprising:
a primary sensor (24) comprising a substantially continuous array of primary sensor elements for detecting a primary scale signal falling thereon, said array extending along a measuring dimension, the primary sensor configured to output a signal that is dependent on the relative position of the readhead and a scale along the measuring dimension;
a secondary sensor (26) comprising at least a first secondary sensor element (26a') positioned along the measuring dimension at a location between ends of the primary sensor, for detecting a secondary scale signal falling thereon;
configured such that:
i) the influence of the primary sensor elements on the position signal output by the primary sensor varies along the measuring dimension, according to a multimodal distribution that tapers toward its ends; and
ii) a first notional line (30) can be identified that extends parallel to the measuring dimension and that passes through the at least first secondary sensor element and, on either side of the at least first secondary sensor element, passes through at least one primary sensor element.

2. A position encoder readhead as claimed in claim 1, configured such for at least 15%, for example at least 25%, optionally at least 50%, preferably at least 75% of the length of the at least first secondary sensor element measured perpendicular to the measuring dimension, said first notional line can be identified that extends parallel to the measuring dimension and that passes through the at least first secondary sensor element and, on either side of the at least first secondary sensor element, passes through at least one primary sensor element.

3. A position encoder readhead as claimed in claim 1 or 2, in which said first notional line passes through the at least first secondary sensor element and, on either side of the at least first secondary sensor element, passes through a group of at least X primary sensor elements, where X is at least 5% of the total number of sensing elements in the primary sensor's array of sensing elements.

4. A position encoder readhead as claimed in any preceding claim, in which the multimodal distribution tapers between its peak and trough regions.

5. A position encoder readhead as claimed in any preceding claim, in which the at least first secondary sensor element is substantially centrally positioned with respect to the primary sensor along the measuring dimension.

6. A position encoder readhead as claimed in any preceding claim, in which the at least a first secondary sensor element is arranged beside the primary sensor, at least predominantly on a first side of a notional centre-line of the primary sensor that extends parallel to the measuring dimension.

7. A position encoder readhead as claimed in claim 6, in which the secondary sensor comprises at least a second secondary sensor element positioned along the measuring dimension at a location between the ends of the primary sensor, and arranged beside the primary sensor on a second side of said notional centre-line of the primary sensor that extends parallel to the measuring dimension, and in which the primary sensor is configured such that:
i) a second notional line can be identified that extends parallel to the measuring dimension and that passes through the second secondary sensor element and, on either side of the at least second secondary sensor element, passes through at least one primary sensing element.

8. A position encoder readhead as claimed in claim 7, configured such for at least 50%, optionally at least 75%, preferably at least 95% of the length of the at least second secondary sensor element measured perpendicular to the measuring dimension, said second notional line can be identified that extends parallel to the measuring dimension and that passes through the at least second secondary sensor element and, on either side of the at least second secondary sensor element, passes through at least one primary sensing element.

9. A position encoder readhead as claimed in claim 7 or 8, in which the at least second secondary sensor element is substantially centrally positioned with respect to the primary sensor along the measuring dimension such that it at least partially sits within a centrally located trough-shaped section of the primary sensor.

10. A position encoder readhead as claimed in any preceding claim, in which the primary sensor is configured such that the influence of the primary sensor elements on the position signal output thereby varies along the measuring dimension according to a bimodal distribution that tapers toward its ends.

11. A position encoder readhead as claimed in any preceding claim, in which the variation of the influence of the primary sensor on the position signal output thereby is substantially symmetrical about a notional centre line of the primary sensor that extends perpendicular to the measuring dimension.

12. A position encoder readhead as claimed in claim 1, in which the sensing area of the entire primary sensor is shaped such that the effective sensing lengths of the primary sensor elements, as measured in a direction perpendicular to the measuring dimension, vary along the measuring dimension, according to a multimodal distribution that tapers toward its ends.

13. A position encoder readhead as claimed in any preceding claim, wherein the primary sensor comprises an incremental position sensor, said continuous array of primary sensor elements comprise a continuous array of incremental position sensor elements, and said primary scale signal comprises an incremental position scale signal.

14. A position encoder readhead as claimed in any preceding clam, in which the secondary sensor comprises a reference mark sensor and wherein said at least first secondary sensor element comprises an at least first secondary sensor element.

15. A position encoder readhead as claimed in any preceding claim, in which the primary and secondary sensor elements comprise photo-sensitive elements.

16. A position encoder readhead as claimed in any preceding claim, in which the primary scale signal comprises a fringe field, optionally an interference fringe.

17. A position encoder readhead as claimed in claim 16, in which the readhead comprises one or more diffraction gratings for producing said interference fringe.

18. A position encoder apparatus comprising:
a readhead according to any preceding claim; and
a scale comprising at least one series of position features from which said primary scale signal is produced.

## Patentansprüche

1. Positionscodierer-Lesekopf (6) zum Lesen eines Skalenelements (4), wobei der Lesekopf Folgendes umfasst:
einen primären Sensor (24), der eine im Wesentlichen kontinuierliche Anordnung von primären Sensorelementen zum Detektieren eines darauf fallenden primären Skalensignals umfasst, wobei sich die Anordnung entlang einer Messdimension erstreckt, wobei der primäre Sensor konfiguriert ist, um ein Signal auszugeben, das von der relativen Position des Lesekopfs und einer Skala entlang der Messdimension abhängig ist;
einen sekundären Sensor (26), der mindestens ein erstes sekundäres Sensorelement (26a') umfasst, das entlang der Messdimension an einer Stelle zwischen Enden des primären Sensors positioniert ist, zum Detektieren eines darauf fallenden sekundären Skalensignals;
der derart konfiguriert, dass:
i) der Einfluss der primären Sensorelemente auf das von dem primären Sensor ausgegebene Positionssignal entlang der Messdimension gemäß einer multimodalen Verteilung variiert, die sich zu ihren Enden hin verjüngt; und
ii) eine erste gedachte Linie (30) identifiziert werden kann, die sich parallel zu der Messdimension erstreckt und die durch das mindestens erste sekundäre Sensorelement verläuft und auf jeder Seite des mindestens ersten sekundären Sensorelements durch mindestens ein primäres Sensorelement verläuft.

2. Positionscodierer-Lesekopf nach Anspruch 1, der derart konfiguriert ist, dass für mindestens 15 %, zum Beispiel mindestens 25 %, optional mindestens 50 %, vorzugsweise mindestens 75 % der senkrecht zu der Messdimension gemessenen Länge des mindestens ersten sekundären Sensorelements die erste gedachte Linie identifiziert werden kann, die sich parallel zu der Messdimension erstreckt und die durch das mindestens erste sekundäre Sensorelement verläuft und auf jeder Seite des mindestens ersten sekundären Sensorelements durch mindestens ein primäres Sensorelement verläuft.

3. Positionscodierer-Lesekopf nach einem der Ansprüche 1 oder 2, wobei die erste gedachte Linie durch das mindestens erste sekundäre Sensorelement verläuft und auf jeder Seite des mindestens ersten sekundären Sensorelements durch eine Gruppe von mindestens X primären Sensorelementen verläuft, wobei X mindestens 5 % der Gesamtanzahl von Erfassungselementen in der Anordnung von Erfassungselementen des primären Sensors beträgt.

4. Positionscodierer-Lesekopf nach einem der vorhergehenden Ansprüche, wobei sich die multimodale Verteilung zwischen ihren Spitzen- und Talregionen verjüngt.

5. Positionscodierer-Lesekopf nach einem der vorhergehenden Ansprüche, wobei das mindestens erste sekundäre Sensorelement im Wesentlichen mittig in Bezug auf den primären Sensor entlang der Messabmessung positioniert ist.

6. Positionscodierer-Lesekopf nach einem der vorhergehenden Ansprüche, wobei das mindestens eine erste sekundäre Sensorelement neben dem primären Sensor mindestens überwiegend auf einer ersten Seite einer gedachten Mittellinie des primären Sensors, die sich parallel zu der Messdimension erstreckt, angeordnet ist.

7. Positionscodierer-Lesekopf nach Anspruch 6, wobei der sekundäre Sensor mindestens ein zweites sekundäres Sensorelement umfasst, das entlang der Messdimension an einer Stelle zwischen den Enden des primären Sensors positioniert ist und neben dem primären Sensor auf einer zweiten Seite der gedachten Mittellinie des primären Sensors angeordnet ist, die sich parallel zu der Messdimension erstreckt, und wobei der primäre Sensor derart konfiguriert ist, dass:
i) eine zweite gedachte Linie identifiziert werden kann, die sich parallel zu der Messdimension erstreckt und die durch das zweite sekundäre Sensorelement verläuft und auf jeder Seite des mindestens zweiten sekundären Sensorelements durch mindestens ein primäres Sensorelement verläuft.

8. Positionscodierer-Lesekopf nach Anspruch 7, derart konfiguriert, dass für mindestens 50 %, optional mindestens 75 %, vorzugsweise mindestens 95 % der senkrecht zu der Messdimension gemessenen Länge des mindestens zweiten sekundären Sensorelements die zweite gedachte Linie identifiziert werden kann, die sich parallel zu der Messdimension erstreckt und die durch das mindestens zweite sekundäre Sensorelement verläuft und auf jeder Seite des mindestens zweiten sekundären Sensorelements durch mindestens ein primäres Sensorelement verläuft.

9. Positionscodierer-Lesekopf nach einem der Ansprüche 7 oder 8, wobei das mindestens zweite sekundäre Sensorelement im Wesentlichen mittig in Bezug auf den primären Sensor entlang der Messdimension derart positioniert ist, dass es mindestens teilweise innerhalb eines mittig angeordneten muldenförmigen Abschnitts des primären Sensors sitzt.

10. Positionscodierer-Lesekopf nach einem der vorhergehenden Ansprüche, wobei der primäre Sensor derart konfiguriert ist, dass der Einfluss der primären Sensorelemente auf das dadurch ausgegebene Positionssignal entlang der Messdimension gemäß einer bimodalen Verteilung variiert, die sich zu ihren Enden hin verjüngt.

11. Positionscodierer-Lesekopf nach einem der vorhergehenden Ansprüche, wobei die Variation des Einflusses des primären Sensors auf das dadurch ausgegebene Positionssignal im Wesentlichen symmetrisch um eine gedachte Mittellinie des primären Sensors ist, die sich senkrecht zu der Messdimension erstreckt.

12. Positionscodierer-Lesekopf nach Anspruch 1, wobei der Detektionsbereich des gesamten primären Sensors derart geformt ist, dass die effektiven Detektionslängen der primären Sensorelemente, gemessen in einer Richtung senkrecht zu der Messdimension, entlang der Messdimension gemäß einer multimodalen Verteilung variieren, die sich zu ihren Enden hin verjüngt.

13. Positionscodierer-Lesekopf nach einem der vorhergehenden Ansprüche, wobei der primäre Sensor einen Inkrementalpositionssensor umfasst, die kontinuierliche Anordnung von primären Sensorelementen eine kontinuierliche Anordnung von Inkrementalpositionssensorelementen umfasst und das primäre Skalensignal ein Inkrementalpositionsskalensignal umfasst.

14. Positionscodierer-Lesekopf nach einem der vorhergehenden Ansprüche, wobei der sekundäre Sensor einen Referenzmarkierungssensor umfasst und wobei das mindestens erste sekundäre Sensorelement ein mindestens erstes sekundäres Sensorelement umfasst.

15. Positionscodierer-Lesekopf nach einem der vorhergehenden Ansprüche, wobei das primäre und das sekundäre Sensorelement lichtempfindliche Elemente umfassen.

16. Positionscodierer-Lesekopf nach einem der vorhergehenden Ansprüche, wobei das primäre Skalensignal ein Streifenfeld, optional einen Interferenzstreifen, umfasst.

17. Positionscodierer-Lesekopf nach Anspruch 16, wobei der Lesekopf ein oder mehrere Beugungsgitter zum Erzeugen des Interferenzstreifens umfasst.

18. Positionscodierervorrichtung, die umfasst:
einen Lesekopf nach einem der vorhergehenden Ansprüche; und
eine Skala, die mindestens eine Reihe von Positionsmerkmalen umfasst, aus denen das primäre Skalensignal erzeugt wird.

## Revendications

1. Une tête de lecture de codeur de position (6) pour lire un élément de règle (4), la tête de lecture comprenant :
un capteur primaire (24) comprenant un réseau sensiblement continu d'éléments de capteurs primaires pour détecter un signal de règle primaire tombant sur celui-ci, ledit réseau s'étendant le long d'une dimension de mesure, le capteur primaire étant configuré pour émettre un signal qui dépend de la position relative de la tête de lecture et d'une règle le long de la dimension de mesure ;
un capteur secondaire (26) comprenant au moins un premier élément de capteur secondaire (26a') positionné le long de la dimension de mesure à un emplacement entre les extrémités du capteur primaire, pour détecter un signal de règle secondaire tombant sur celui-ci ;
configuré de telle sorte que :
i) l'influence des éléments du capteur primaire sur le signal de position délivré par le capteur primaire varie le long de la dimension de mesure, selon une distribution multimodale qui se rétrécit vers ses extrémités, et
ii) une première ligne théorique (30) peut être identifiée qui s'étend parallèlement à la dimension de mesure et qui passe à travers le ou les premiers éléments de capteur secondaire et, de chaque côté du ou des premiers éléments de capteur secondaire, passe à travers du ou des éléments de capteur primaire.

2. Une tête de lecture de codeur de position selon la revendication 1, configurée de telle sorte qu'au moins 15 %, par exemple au moins 25 %, éventuellement au moins 50 %, de préférence au moins 75 % de la longueur du ou des premiers éléments de capteur secondaire mesurée perpendiculairement à la dimension de mesure, ladite première ligne théorique peut être identifiée qui s'étend parallèlement à la dimension de mesure et qui passe à travers le ou les premiers éléments de capteur secondaire et, de chaque côté du ou des premiers éléments de capteur secondaire, passe à travers au moins un élément de capteur primaire.

3. Une tête de lecture de codeur de position selon la revendication 1 ou 2, dans laquelle ladite première ligne théorique passe à travers le ou les premiers éléments de capteur secondaire et, de chaque côté du ou des premiers éléments de capteur secondaire, passe à travers un groupe d'au moins X éléments de capteur primaires, où X est au moins 5 % du nombre total d'éléments de capteur dans le réseau d'éléments de capteur du capteur primaire.

4. Une tête de lecture de codeur de position selon l'une quelconque des revendications précédentes, dans laquelle la distribution multimodale se rétrécit entre ses régions de crête et de creux.

5. Une tête de lecture de codeur de position selon l'une quelconque des revendications précédentes, dans laquelle le ou les premiers éléments de capteur secondaire sont positionnés sensiblement au centre par rapport au capteur primaire le long de la dimension de mesure.

6. Une tête de lecture de codeur de position selon l'une quelconque des revendications précédentes, dans laquelle le ou les premiers éléments de capteur secondaire sont agencés à côté du capteur primaire, au moins principalement sur un premier côté d'une ligne centrale théorique du capteur primaire qui s'étend parallèlement à la dimension de mesure.

7. Une tête de lecture de codeur de position selon la revendication 6, dans laquelle le capteur secondaire comprend au moins un second élément de capteur secondaire positionné le long de la dimension de mesure à un emplacement entre les extrémités du capteur primaire, et agencée à côté du capteur primaire sur un second côté de ladite ligne centrale théorique du capteur primaire qui s'étend parallèlement à la dimension de mesure, et dans laquelle le capteur primaire est configuré de telle sorte que :
i) une seconde ligne théorique peut être identifiée qui s'étend parallèlement à la dimension de mesure et qui passe à travers le second élément de capteur secondaire et, de chaque côté du ou des seconds éléments de capteur secondaire, passe à travers au moins un élément de capteur primaire.

8. Une tête de lecture de codeur de position selon la revendication 7, configurée de telle sorte qu'au moins 50 %, éventuellement au moins 75 %, de préférence au moins 95 % de la longueur du ou des seconds éléments de capteur secondaire mesuré perpendiculairement à la dimension de mesure, ladite seconde ligne théorique peut être identifiée qui s'étend parallèlement à la dimension de mesure et qui passe à travers le ou les seconds éléments de capteur secondaire et, de chaque côté du ou des seconds éléments de capteur secondaire, passe à travers au moins un élément de capteur primaire.

9. Une tête de lecture de codeur de position selon la revendication 7 ou 8, dans laquelle le ou les seconds éléments de capteur secondaire sont positionnés sensiblement au centre par rapport au capteur primaire le long de la dimension de mesure de telle sorte qu'il se trouve au moins partiellement à l'intérieur d'une section en forme de cuvette située au centre du capteur primaire.

10. Une tête de lecture de codeur de position selon l'une quelconque des revendications précédentes, dans laquelle le capteur primaire est configuré de telle sorte que l'influence des éléments de capteur primaire sur la sortie de signal de position varie ainsi le long de la dimension de mesure selon une distribution bimodale qui se rétrécit vers ses extrémités.

11. Une tête de lecture de codeur de position selon l'une quelconque des revendications précédentes, dans laquelle la variation de l'influence du capteur primaire sur la sortie de signal de position est sensiblement symétrique par rapport à une ligne centrale théorique du capteur primaire qui s'étend perpendiculairement à la dimension de mesure.

12. Une tête de lecture de codeur de position selon la revendication 1, dans laquelle la zone de détection de l'ensemble du capteur primaire est formée de telle sorte que les longueurs de détection effectives des éléments de capteur primaires, telles que mesurées dans une direction perpendiculaire à la dimension de mesure, varient le long de la dimension de mesure, selon une distribution multimodale qui se rétrécit vers ses extrémités.

13. Une tête de lecture de codeur de position selon l'une quelconque des revendications précédentes, dans laquelle le capteur primaire comprend un capteur de position incrémentiel, ledit réseau continu d'éléments de capteurs primaires comprend un réseau continu d'éléments de capteurs de position incrémentiels, et ledit signal de règle primaire comprend un signal de règle de position incrémentiel.

14. Une tête de lecture de codeur de position selon l'une quelconque des revendications précédentes, dans laquelle le capteur secondaire comprend un capteur de repère de référence et dans laquelle ledit ou lesdits premiers éléments de capteur secondaire comprennent au moins un premier élément de capteur secondaire.

15. Une tête de lecture de codeur de position selon l'une quelconque des revendications précédentes, dans laquelle les éléments de capteur primaire et secondaire comprennent des éléments photosensibles.

16. Une tête de lecture de codeur de position selon l'une quelconque des revendications précédentes, dans laquelle le signal de règle primaire comprend un champ de franges, facultativement une frange d'interférence.

17. Une tête de lecture de codeur de position selon la revendication 16, dans laquelle la tête de lecture comprend un ou plusieurs réseaux de diffraction pour produire ladite frange d'interférence.

18. Un appareil de codage de position comprenant :
une tête de lecture selon l'une quelconque des revendications précédentes ; et
une règle comprenant au moins une série de caractéristiques de position à partir desquelles ledit signal de règle primaire est produit.
